# EUROPÄISCHE PATENTSCHRIFT

(11) **EP 1 726 606 B1**
(45) Veröffentlichungstag und Bekanntmachung des Hinweises auf die Patenterteilung: **05.03.2008**
(21) Anmeldenummer: 06008049.6
(22) Anmeldetag: 19.04.2006
(51) Int. Cl.: C08G 18/77, C08G 18/38, C09D 175/12

(54) **Bindemittelgemische aus Polyasparaginsäureestern und sulfonatmodifizierten Polyisocyanaten**
Binder composition comprising polyaspartic ester and sulfonated polyiscocyanate
Composition de liant contenant un ester de polyaspartate et un polyisocyanate sulfoné

(30) Priorität: 30.04.2005 DE 102005020269
(43) Veröffentlichungstag der Anmeldung: 29.11.2006
(73) Patentinhaber: Bayer MaterialScience AG, 51368 Leverkusen (DE)
(72) Erfinder: Mundstock, Holger, 42929 Wermelskirchen (DE); Niesten, Meike, Dr., 51061 Köln (DE); Reidenbach, Nicole, 51381 Leverkusen (DE); Schmitz, Jörg, Dr., 51065 Köln (DE)

(56) Entgegenhaltungen:
- EP-A- 0 470 461
- EP-A- 1 038 897
- DE-A1- 10 024 624

## Beschreibung

Die vorliegende Erfindung betrifft neuartige Zweikomponenten-Polyharnstoff-Beschichtungssysteme basierend auf sulfonatmodifizierten Polyisocyanaten und speziellen aminofunktionellen Härtern.

Zweikomponenten-Beschichtungssysteme auf Polyurethan- oder Polyharnstoff-Basis sind bekannt und werden vielfältig in der Technik eingesetzt. In der Regel enthalten sie eine flüssige Polyisocyanat-Komponente und eine flüssige isocyanatreaktive Komponente. Durch Reaktion von Polyisocyanaten mit Aminen entstehen stark vernetzte Polyharnstoff-Beschichtungen. Primäre Amine und Isocyanate reagieren jedoch meistens sehr schnell miteinander. Typische Topf- oder Gelierzeiten solcher Systeme betragen daher oft nur einige Sekunden bis wenige Minuten. Deshalb können solche Polyharnstoff-Beschichtungen nicht manuell, sondern nur mit speziellen Spritzapparaturen appliziert werden. Solche Beschichtungen besitzen jedoch ausgezeichnete physikalische Eigenschaften und sind daher trotz der schwierigen Applikationstechnik hochinteressant.

Niederviskose blockierte Amine wie Ketimine und Aldimine werden eingesetzt, um die Reaktivität zu kontrollieren (Squiller, Wicks, Yeske, 'High solids Polyurethane coatings' in Polymeric Materials Encyclopedia, J.C Salamone, Ed., CRC Press, 1996, Vol 5, DE-OS 1 520 139 oder DE-OS 3 308 418). Die Deblockierung (Hydrolyse) findet unter Einfluss von Luftfeuchtigkeit statt, wobei das primäre Amin freigesetzt wird.

Eine weitere Möglichkeit die Reaktion zwischen Polyisocyanaten und Aminen zu verzögern ist die Verwendung von sterisch gehinderten sekundären Aminen. EP-A 403 921 und US-A 5 126 170 offenbaren die Bildung von Polyhamstoff-Beschichtungen durch Reaktion von Polyasparaginsäureestem mit Polyisocyanaten. Polyasparaginsäureester besitzen eine niedrige Viskosität und im Vergleich zu anderen sekundären aliphatischen Aminen eine verringerte Reaktivität gegenüber Polyisocyanaten. Dabei stehen je nach molekularem Aufbau Typen unterschiedlicher Reaktivität zur Verfügung. So können sowohl lösemittelfreie oder -arme Beschichtungen mit längeren Topf- und Trocknungszeiten, als auch Systeme mit sehr schnellen Trocknungs- und kürzeren Topfzeiten hergestellt werden.

In der Praxis werden die bereits oben erwähnten Aldimine und Ketimine oftmals mit Polyasparaginsäureestem kombiniert.

Der Nachteil dieser Systeme bei Verwendung herkömmlichen Polyisocyanate als Härter besteht darin, dass entweder schnelle Trocknung bei kurzer Topfzeit oder lange Topfzeit mit langsamer Trocknung resultieren.

Die der vorliegenden Erfindung zugrunde liegende Aufgabe bestand nun darin neue Polyhamstoffsysteme zur Verfügung zu stellen, die bei gleicher oder verlängerter Topfzeit eine deutlich schnellere Aushärtung zeigen als die bereits aus dem Stand der Technik bekannten Systeme.

Überraschenderweise wurde nun gefunden, dass diese Aufgabe durch die Verwendung von sulfonatmodifizierten Polyisocyanaten als Reaktionspartner für die aminofunktionellen Bindemittel auf Basis von Polyasparaginsäureestern bzw. deren Mischung mit Aldiminen oder Ketiminen gelöst werden kann. Ein besonderer Vorteil der erfindungsgemäßen Systeme liegt in der Verarbeitbarkeit und Applizierbarkeit mittels handelsüblicher Techniken, die aus dem Bereich der 2K-PUR Lacke bekannt sind. Spezielle Vorrichtungen sind daher nicht mehr von Nöten.

Gegenstand der Erfindung sind daher zweikomponentige Beschichtungssysteme zur Herstellung von Polyhamstoffbeschichtungen, mindestens enthaltend
A) ein sulfonatgruppenhaltiges Polyisocyanat und
B) einen aminofunktionellen Polyasparaginsäureester der allgemeinen Formel (I) 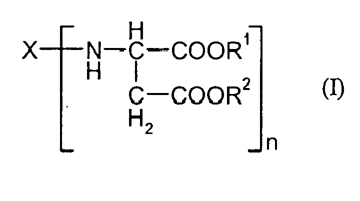 in der
   - X: für einen n-wertigen organischen Rest steht, der durch Entfernung der primären Aminogruppen eines n-wertigen Polyamins erhalten wird,
   - R¹, R²: für gleiche oder verschiedene organische Reste stehen, die unter den Reaktionsbedingungen gegenüber Isocyanatgruppen inert sind und
   - n: für eine ganze Zahl von mindestens 2 steht.

Die in A) eingesetzten Polyisocyanate weisen neben freien NCO-Gruppen auch eine oder mehrere Sulfonsäure- oder Sulfonatgruppen auf. Die Herstellung solcher modifizierten Polyisocyanate ist in WO-A 01-88006 im Detail beschrieben.

Diese basieren auf organischen Polyisocyanaten bevorzugt mit einer mittleren NCO-Funktionalität von mindestens 2 und einem Molekulargewicht von mindestens 140 g/mol. Gut geeignet sind vor allem (i) unmodifizierte organische Polyisocyanate des Molekulargewichtsbereichs 140 bis 300 g/mol, (ii) Lackpolyisocyanate eines Molekulargewichts von 300 bis 1000 g/mol sowie (iii) urethangruppenaufweisende NCO-Prepolymere eines über Mₙ = 1000 g/mol liegenden Molekulargewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanato-dodecan, Cyclohexan-1,3- und -1,4-diisocyanat, Xylylendüsocyanat-Isomere, Triisocyanatononan (TIN), 2,4-Diisocyanatotoluol oder dessen Gemische mit 2,6-Diisocyanatotoluol mit bevorzugt, bezogen auf Gemische, bis zu 35 Gew.-% 2,6-Diisocyanatotoluol, 2,2'-, 2,4'-, 4,4'-, Diisocyanatodiphenylmethan oder technische Polyisocyanatgemische der Diphenylmethanreihe oder beliebige Gemische der genannten Isocyanate.

Polyisocyanate der Gruppe (ii) sind die an sich bekannten Lackpolyisocyanate. Unter dem Begriff "Lackpolyisocyanate" sind im Rahmen der Erfindung Verbindungen oder Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimersisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab.

Bevorzugt handelt es sich bei den "Lackpolyisocyanaten" (ii) um Biuretpolyisocyanate, Isocyanuratgrupen-aufweisende Polyisocyanate, Isocyanurat- und Uretdiongruppen-aufweisende Polyisocyanatgemische, Urethan- und/oder Allophanatgruppen und/oder Oxadianzinstruktur-aufweisende Polyisocyanate oder um Isocyanurat- und Allophanat- und Oxadianzingruppen aufweisende Polyisocyanatgemische auf Basis einfacher Diisocyanate.

Die Herstellung von derartigen Lackpolyisocyanaten ist bekannt und beispielweise in der DE-A 1 595 273, DE-A 3 700 209 und DE-A 3 900 053 oder in der EP-A-0 330 966, EP-A 0 259 233, EP-A- 0 377 177, EP-A-0 496 208, EP-A-0 524 501 oder US-A 4 385 171 beschrieben.

Polyisocyanate der Gruppe (iii) sind die an sich bekannten Isocyanatgruppen-aufweisenden Prepolymere auf Basis von einfachen Diisocyanaten der oben beispielhaft genannten Art und/oder auf Basis von Lackpolyisocyanaten (ii) einerseits und organischen Polyhydroxyverbindungen eines über 300 g/mol liegenden Molekulargewichts andererseits. Während es sich bei den Urethangruppen-aufweisenden Lackpolyisocyanaten der Gruppe (ii) um Derivate von niedermolekularen Polyolen des Molekulargewichtsbereichs 62 bis 300 g/mol handelt, geeignete Polyole sind beispielsweise Ethylenglykol, Propylenglykol, Trimethylolpropan, Glycerin oder Gemische dieser Alkohole, werden zur Herstellung der NCO-Prepolymere der Gruppe (iii) Polyhydroxyverbindungen eines über 300 g/mol, bevorzugt über 500 g/mol, besonders bevorzugt eines zahlenmittleren Molekulargewichts von 500 und 8 000 g/mol eingesetzt. Derartige Polyhydroxyverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Zur Herstellung der NCO-Prepolymeren (iii) oder deren Gemische mit den Lackpolyisocyanaten (ii) werden Diisocyanate (i) der oben beispielhaft genannten Art oder Lackpolyisocyanate der unter (ii) beispielhaft genannten Art mit den höhermolekularen Hydroxyverbindungen oder deren Gemischen mit niedermolekularen Polyhydroxyverbindungen der beispielhaft genannten Art unter Einhaltung eines NCO/OH Äquivalentverhältnisses von 1,1:1 bis 40:1, bevorzugt 2:1 bis 25:1 unter Urethanbildung umgesetzt. Gegebenenfalls kann bei Verwendung eines Überschusses an destillierbarem Ausgangsdiisocyanat dieser im Anschluß an die Umsetzung destillativ entfernt werden, so dass monomerenfreie NCO-Prepolymere, d.h. Gemische aus Ausgangsdiisocyanaten (i) und echten NCO-Prepolymeren (iii) vorliegen.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren.

Zur Herstellung dieser sulfonatmodifizierten Polyisocyanate werden die vorstehend beschriebenen Basisisocyanate gegebenenfalls mit difunktionellen Polyethern unter partieller.Urethanisierung der NCO-Gruppen umgesetzt und dann mit Verbindungen, die neben wenigstens einer Sulfonsäure bzw. Sulfonatgruppe auch eine gegenüber NCO-Gruppen reaktive Funktion wie eine OH- oder NH-Gruppe aufweisen, zur Reaktion gebracht. Bevorzugt sind dies 2-(Cyclohexylamino)-ethansulfonsäure und/oder 3-(Cyclohexylamino)-propansulfonsäure. Nach dem Polymeraufbau werden die Sulfonsäuregruppen ganz oder teilweise durch Zugabe einer Base, die bevorzugt ein tertiäres Amin ist, deprotoniert.

Besonders bevorzugt basieren die als Basisisocyanate verwandten Polyisocyanate auf Hexamethylendiisocyanat, Isophorondiisocyanat und/oder 4,4'-Dlcyclohexylmethandiisocyanat.

Die so erhältlichen und in A) eingesetzten sulfonatmodifizierten Polyisocyanate weisen bevorzugt eine mittlere Isocyanatfunktionalität von mindestens 1,8, einem Gehalt an Isocyanatgruppen (berechnet als NCO; Molekulargewicht = 42) von 4,0 bis 26,0 Gew.-%, einem Gehalt an gebundenen Sulfonsäure- und Sulfonatgruppen (berechnet als SO₃⁻; Molekulargewicht = 80 g/mol) von 0,1 bis 7,7 Gew.-% auf.

Sind Polyethereinheiten mit enthalten, so beträgt der Gehalt an innerhalb von Polyetherketten gebundenen Ethylenoxideinheiten (berechnet als C₂H₂O; Molekulargewicht = 44) im sulfonatmodifizierten Polyisocyanat 0 bis 19,5 Gew.-%.

Solche optional eingebauten Polyetherketten weisen bevorzugt im statistischen Mittel 5 bis 35 Ethylenoxideinheiten auf.

Die Sulfonatgruppen haben dabei als Gegenion bevorzugt ein aus tertiären Aminen durch Protonierung gebildetes Ammoniumion. Das Verhältnis der Summe aus Sulfonsäuregruppen und Sulfonatgruppen zur Summe aus tertiärem Amin und dem davon abgeleiteten protonierten Ammoniumion beträgt typischerweise 0,2 bis 2,0.

Beispiele der tertiären Amine sind Monoamine, wie Trimethylamin, Triethylamin, Tripropylamin, Tributylamin, Dimethylcyclohexylamin, N-Methylmorpholin, N-Ethylmorpholin, N-Methylpiperidin, N-Ethylpiperidin, oder um tertiäre Diamine, wie 1,3-Bis-(dimethylamino)-propan, 1,4-Bis-(dimethylamino)-butan oder N,N'-Dimethylpiperazin. Geeignete, jedoch weniger bevorzugte Neutralisationsamine sind aber auch gegenüber Isocyanaten reaktive Gruppen tragende tertiäre Amine, wie die Alkanolamine Dimethylethanolamin, Methyldiethanolamin oder Triethanolamin. Bevorzugt ist Dimethylcyclohexylamin.

Neben den sulfonatmodifizierten Polyisocyanaten der Komponente A) können auch nicht-sulfonatmodifizierte Polyisocyanate als weitere Polyisocyanate in den erfindungsgemäßen Beschichtungsmitteln enthalten sein. Diese sulfonatgruppenfreien Polyisocyanate entsprechen den bei der Herstellung der sulfonatgruppenhaltigen Polyisocyanate eingesetzten Basisisocyanate, bevorzugt der Gruppen (i) bis (iii).

Sofern sulfonatgruppenfreie Polyisocyanate mitverwendet werden, beträgt das Gewichtsverhältnis von sulfonatgruppenhaltigen zu sulfonatgruppenfreien Polyisocyanaten 99 : 1 bis 10 : 90, bevorzugt 80 : 20 bis 20 : 80.

In Formel (I) der Polyasparaginsäureester der Komponente B) basiert die Gruppe X bevorzugt auf einem n-wertigen Polyamin ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4-und/oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexahydrotoluylendiamin, 2,4'-und/oder 4,4'-Diarnino-dicyclohexylmethan, 3,3'-Dimethyl-4,4'-diamino-dicyclohexylmethan, 2,4,4'-Triamino-5-methyl-dicyclohexylmethan und Polyetherpolyaminen mit aliphatisch gebundenen primären Aminogruppen mit einem zahlenmittleren Molekulargewicht Mₙ von 148 bis 6000 g/mol.

Besonders bevorzugt basiert die Gruppe X auf 1,4-Diaminobutan, 1,6-Diaminohexan, 2,2,4-und/oder 2,4,4-Trimethyl-1,6-diaminohexan, 1-Amino-3,3,5-trimethyl-5-aminomethyl-cyclohexan, 4,4'-Diamino-dlcyclohexylmethan oder 3,3'-Dimethyl-4,4'-dianiino-dlcyclohexylmethan.

In Bezug auf die Reste R¹ und R² bedeutet "unter den Reaktionsbedingungen gegenüber Isocyanatgruppen inert", dass diese Reste keine Gruppen mit Zerewitinoff-aktivem Wasserstoff (CH-acide Verbindungen; vgl. Römpp Chemie Lexikon, Georg Thieme Verlag Stuttgart) wie OH, NH oder SH aufweisen.

Bevorzugt sind R¹ und R² unabhängig voneinander C₁ bis C₁₀-Alkylreste, besonders bevorzugt Methyl oder Ethylreste.

Für den Fall, dass X auf 2,4,4'-Triamino-5-methyl-dicyclohexylmethan basiert, sind bevorzugt R¹ = R² = Ethyl.

Bevorzugt ist n in Formel (I) eine ganze Zahl von 2 bis 6, besonders bevorzugt 2 bis 4.

Die Herstellung der aminofunktionellen Polyasparaginsäureester B) erfolgt in an sich bekannter Weise durch Umsetzung der entsprechenden primären Polyamine der Formel 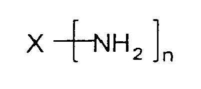 mit Malein- oder Fumarsäureestern der allgemeinen Formel

R¹OOC-CR³=CR⁴-COOR²

Geeignete Polyamine sind die oben genannten Diamine. Beispiele geeigneter Malein- oder Fumarsäureester sind Maleinsäuredimethylester, Maleinsäurediethylester, Maleinsäuredibutylester und die entsprechenden Fumarsäureester.

Die Herstellung der aminofunktionellen Polyasparaginsäureester B) aus den genannten Ausgangsmaterialien erfolgt bevorzugt innerhalb des Temperaturbereichs von 0 bis 100°C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen.

Neben dem aminofunktionellen Polyasparaginsäureester der Komponente B) können in den erfindungsgemäßen Beschichtungssystemen auch Verbindungen des Molekulargewichtsbereichs Mₙ von 112 bis 6500 g/mol enthalten sein, die pro Molekül mindestens zwei Struktureinheiten der Formel (II) aufweisen,

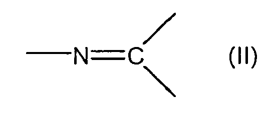

Diese optionalen Verbindungen mit verkappten Aminofunktionen, die im Rahmen der Erfindung als Polyaldimine bzw. Polyketimine bezeichnet werden, weisen ein Molekulargewicht Mₙ von 112 bis 6500 g/mol, vorzugsweise 140 bis 2500 g/mol und besonders bevorzugt 140 bis 458 g/mol auf. Das Molekulargewicht kann, falls es sich nicht als Summe der Atomgewichte der einzelnen Elemente ohnehin leicht ermitteln lässt, beispielsweise aus der Funktionalität und dem Gehalt an funktionellen Gruppen (beispielsweise ermittelbar durch Bestimmung der nach Hydrolyse vorliegenden primären Aminogruppen) errechnet oder auch, bei höhermolekularen Verbindungen, gelpermeationschromatographisch unter Verwendung von Polystyrol als Standard ermittelt werden.

Zu den bevorzugten Polyaldiminen bzw. Polyketiminen gehören Verbindungen der allgemeinen Strukturformel (III) 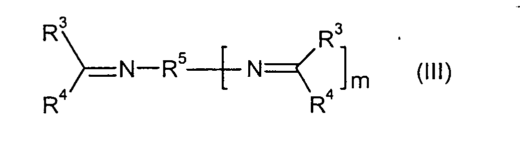 wobei
- R³ und R⁴: gleiche oder verschiedene Reste sind und Wasserstoff oder Kohlenwasserstoffreste mit bis zu 20 Kohlenstoffatomen sind, wobei R³ und R⁴ in letzterem Fall auch zusammen mit dem Kohlenstoffatom einen 5- oder 6-gliedrigen cycloaliphatischen Ring bilden können,
- R⁵: ein (m+1)-wertiger Rest ist, wie er durch Entfernung der primären Aminogruppen aus einem entsprechenden, gegebenenfalls Sauerstoff- und/oder Stickstoffatome enthaltenden Polyamin erhalten wird.
- m: eine ganze Zahl von 1 bis 3 ist.

Bevorzugt sind R³ und R⁴ unabhängig voneinander Alkylreste mit 1 bis 8 Kohlenstoffatomen.

Bevorzugt weist das R⁵ zugrunde liegende Polyamin ein zahlenmittleres Molekulargewicht Mₙ von 88 bis 2000 g/mol auf.

Besonders bevorzugt sind Verbindungen der Formel (III), in der alle Reste R³ für Wasserstoff stehen, die Reste R⁴ für Kohlenwasserstoffreste mit bis zu 8 Kohlenstoffatomen stehen und m=1 ist.

Die zur Herstellung der Polyaldimine bzw. Polyketimine verwendbaren Aldehyde bzw. Ketone entsprechen der Formel (IV) 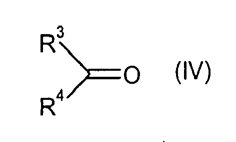 und weisen vorzugsweise ein Molekulargewicht von 44 bis 128 g/mol (Aldhehyde) bzw. 58 bis 198 g/mol (Ketone) auf.

Geeignete Aldehyde sind beispielsweise Acetaldehyd, Propionaldehyd, n-Butyraldehyd, Isobutyraldehyd, Trimethylacetataldehyd, 2,2-Dimethylpropanal, 2-Ethylhexanal, 3-Cyclohexan-1-carboxaldehyd, Hexanal, Heptanal, Octanal, Valeraldehyd, Benzaldehyd, Tetrahydrobenzaldehyd, Hexahydrobenzaldehyd, Propargyladehyd, p-Toluylaldehyd, Phenylethanal, 2-Methylpentanal, 3-Methylpentanal, 4-Methylpentanal, Sorbinaldehyd.

Besonders bevorzugt sind dabei n-Butyraldehyd, Isobutyraldehyd, Trimethlyacetaldehyd, 2-Ethylhexanal und Hexahydrobenzaldehyd.

Geeignete Ketone sind beispielsweise Aceton, Methylethylketon, Methylpropylketon, Methylisopropylketon, Methylbutylketon, Methylisobutylketon, Methyl-tert-butylketon, Methyl-n-amylketon, Methylisamyl-keton, Methylheptylketon, Methylundecylketon, Diethylketon, Ethylbutylketon, Ethylamylketon, Diisopropylketon, Diisobutylketon, Cyclohexanon, Cyclopentanon, Methylcyclohexanon, Isophoron, 5-Methyl-3-heptanon, 1-Phenyl-2-propanon, Acetophenon, Methylnonylketon, Dinoylketon, 3,3,5-Trimethlycyclohexanon.

Besonders bevorzugte Ketone sind Cyclopentanon, Cyclohexanon, Methylcyclopentanon, Methylcyclohexanon, 3,3,5-Trimethylcyclopentanon, Cyclobutanon, Methylcyclobutanon, Aceton, Methylethylketon, Methylisobutylketon.

Es könnten selbstverständlich auch Mischungen verschiedener Ketone bzw. Aldehyde und auch Mischungen von Ketonen mit Aldehyden eingesetzt werden um spezielle Eigenschaften zu erzielen.

Bei den zur Herstellung der Polyaldimine bzw. Polyketimine zum Einsatz gelangenden Polyaminen handelt es sich um organische Verbindungen, die mindestens zwei und vorzugsweise 2 (m = 1) aliphatisch und/oder cycloaliphatisch gebundene primäre Aminogruppen aufweisen. Die Verwendung von solchen Aminen, die aromatisch gebundene Aminogruppen aufweisen, ist zwar ebenfalls möglich, jedoch weniger bevorzugt. Die Polyamine weisen im allgemeinen ein zahlenmittleres Molekulargewicht von 60 bis 6000 g/mol, vorzugsweise 88 bis 2000 g/mol und besonders bevorzugt 88 bis 238 g/mol auf. Geeignete Polyamine zur Herstellung dieser der Polyaldimine bzw. Polyketimine sind beispielsweise die bereits oben im Zusammenhang mit der Komponente B) genannten Verbindungen. Selbstverständlich können zur Herstellung der Komponente B) und der optionalen Polyaldimine bzw. Polyketimine jeweils unterschiedliche Polyamine der beispielhaft genannten Art eingesetzt werden.

Die Herstellung der Polyaldimine bzw. Polyketimine erfolgt nach an sich bekannten Methoden durch Umsetzung der Ausgangskomponenten unter Einhaltung eines Stöchiometrischen Verhältnisses von Aminogruppen zu Aldehyd- bzw. Ketogruppen von 1:1 1 bis 1:1,5. Gegebenfalls können zur Reaktionsbeschleunigung katalytische Mengen von sauren Substanzen wie z.B. p-Toluolsulfonsäure, Chlorwasserstoff, Schwefelsäure oder Aluminiumchlorid mit verwendet werden.

Die Umsetzung erfolgt im allgemeinen innerhalb des Temperaturbereichs von 20 bis 180°C, wobei die Reaktion gegebenenfalls unter Verwendung eines Schleppmittels (z.B. Toluol, Xylol, Cyclohexan und Octan) zur Entfernung des Reaktionswassers, so lange durchgeführt wird, bis die berechnete Menge an Wasser (1 Mol Wasser pro Mol primäre Aminogruppe) abgespalten ist bzw. bis kein Wasser mehr abgespalten wird. Anschließend werden die Phasen getrennt bzw. das Schleppmittel und gegebenenfalls vorliegende nicht umgesetzte Edukte destillativ abgetrennt.

Die so erhaltenen Produkte können ohne weitere Reinigung neben der Komponente B) eingesetzt werden.

Sofern solche Polyaldimine bzw. Polyketimine neben den Asparaginsäureestern mitverwendet werden so beträgt das Gewichtsverhältnis von B) zu diesen optionalen Polyaldiminen bzw. Polyketiminen 99 : 1 bis 5 : 95, bevorzugt 80 : 20 bis 20 : 80.

In den erfindungsgemäßen Beschichtungsmitteln beträgt das Verhältnis von freien oder blockierten Aminogruppen zu freien NCO-Gruppen bevorzugt 0,5 : 1 bis 1,5 : 1, besonders bevorzugt 1:1 bis 1,5:1.

Zur Herstellung der erfindungsgemäße Zwei-Komponenten-Bindemittel werden die Einzelkomponenten miteinander vermischt.

Die genannten Beschichtungsmittel können mit den an sich bekannten Techniken wie Sprühen, Tauchen, Fluten, Rollen, Streichen oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200°C.

Die genannten Beschichtungsmittel können beispielsweise auf Metalle, Kunststoffe, Keramik, Glas sowie Naturstoffe aufgebracht werden, wobei die genannten Substrate zuvor einer gegebenenfalls notwendigen Vorbehandlung unterzogen worden sein können.

### Beispiele:

Soweit nicht anders angegeben sind alle Prozentangaben als Gewichtsprozent zu verstehen.

Die dynamischen Viskositäten wurden bei 23°C mit einem Rotationsviskosimeter (ViscoTester^{®} 550, Thermo Haake GmbH, D-76227 Karlsruhe) bestimmt.

Als Maß für die Verarbeitungszeit wurde die Auslaufzeit nach DIN 53211 bestimmt.

Die Hazenfarbzahl wurde bestimmt nach DIN EN 1557

Die Trocknungsgeschwindigkeit wurde nach DIN 53150, DIN EN ISO 1517 bestimmt.

Die Pendelhärte nach König wurde nach DIN 53157 bestimmt (nach Trocknung 10 min 60°C und anschließend 7 Tage Raumtemperatur Lagerung)

### Edukte:

SN: Solvent Naphta wie Solvesso 100, Exxon Mobile, USA; höhersiedendes Kohlenwasserstoffgemisch mit einem Flammpunkt von 55 bis 100°C, lackübliches Lösemittel
BA: Butylacetat
Baysilone OL 17: Verlaufsadditiv auf Basis eines polyethermodifizierten Polysiloxans, Borchers GmbH, Langenfeld, DE
Tinuvin 292: Lichtschutzmittel, HALS, auf Basis eines sterisch gehinderten Amins, Ciba Specialty Chemicals, Basel, CH
Tinuvin 384-2: Lichtschutzmittel, UV-Absorber, auf Basis Benztriazol, Ciba Specialty Chemicals, Basel, CH
Polyisocyanat A1-I: Desmodur^{®} XP 2570, sulfonatgruppenhaltiges aliphatisches Polyisocyanat auf Basis von HDI mit einem NCO-Gehalt von 20,6 % und einer Viskosität bei 23°C von 3500 mPas, Bayer MaterialScience AG, Leverkusen, DE
Polyisocyanat A1-II: Desmodur^{®} XP 2487/1, sulfonatgruppenhaltiges aliphatisches Polyisocyanat auf Basis von HDI mit einem NCO-Gehalt von 20,9 % und einer Viskosität bei 23°C von 6900 mPas, Bayer MaterialScience AG, Leverkusen, DE
Polyisocyanat A2: Desmodur^{®} XP 2410, asymmetrisches HDI Trimerisat mit einem NCO-Gehalt von 23,7 % und einer Viskosität bei 23°C von 700 mPas, Bayer MaterialScience AG, Leverkusen, DE
Polyasparaginsäureester B1-1: Desmophen NH 1420, erhalten durch Addition von 1 Mol 4,4'-Diaminodicyclohexylmethan und 2 Mol Maleinsäurediethylester, Äquivalentgewicht: 277 g mit einer Viskosität von 1500 mPa.s
Polyasparaginsäuerester B1-II: Desmophen VPLS 2973, erhalten durch Addition von 1 Mol 3,3'-Dimethyl-4,4'-Diaminodlcyclohexylmethan und 2 Mol Maleinsäurediethylester, 90 %-ig in BA, Äquivalentgewicht 323 g mit einer Viskosität von 150 mPa.s
Polyaldimin B2: Desmophen VPLS 2142, erhalten durch Addition von 1 Mol 1-Amino-3,3,5-trimetehyl-5-aminomethylcyclohexan (IPDA) und 2 Mol iso-Butyraldehyd, Äquivalentgewicht 139 g, Viskosität 25 mPa.s

**Tabelle 1: Beschichtungszusammensetzung und anwendungstechnische Daten (Mengenangaben in Gewichtsteilen)**

| **Beispiel** | **1** | **2** | **3** | **4** |
|---|---|---|---|---|
| **Komponente A:** | | | | |
| Polyisocyanat A1-I | 39,17 | | 34,56 | |
| Polyisocyanat A1-II | | 38,59 | | 34,29 |
| SN 100: BA 1:9 | | | 11,52 | 11,43 |
| **Komponente B:** | | | | |
| Polyasparaginsäure A1-I | 26,75 | 26,75 | | |
| Polyasparaginsäure A1-II | | | 26,46 | 26,65 |
| Polyaldimin A2 | 13,36 | 13,36 | 13,22 | 13,31 |
| Baysilone OL17 10% in MPA | 0,36 | 0,36 | 0,36 | 0,36 |
| Tinuvin 292 | 1,00 | 1,00 | 1,00 | 1,00 |
| Tinuvin 384-2 | 1,51 | 1,51 | 1,50 | 1,50 |
| SN 100: BA 1:9 | 12,20 | 12,20 | 11,38 | 11,46 |
| **Farbzahl Komponente A** | | | | |
| Sofort | 121 | 121 | | |
| 9 Wochen RT | 141 | 141 | | |
| **Auslaufzeit** DIN4 (sec) nach | | | | |
| 0,0 h | 18 | 17 | 17 | 19 |
| 0,5 | 21 | 23 | 20 | 21 |
| 1,0 | 25 | 30 | 21 | 23 |
| 2,0 | 40 | 50 | 22 | 24 |
| 4,0 | 60 | 95 | 23 | 25 |
| **Trocknungszeit** RT | | | | |
| T1 +min | 15 | 15 | 15 | 30 |
| T3+min | 30 | 30 | 40 | 45 |
| T4+min | 40 | 40 | 90 | 100 |
| **Pendelhärte** | | | | |
| 1 d RT | 150 | 151 | 51 | 113 |
| 7 d RT | 160 | 157 | 112 | 129 |

**Tabelle 2: Beschichtungszusammensetzung und anwendungstechnische Daten (Mengenangaben in Gewichtsteilen) Vergleich**

| **Beispiel** | **5** | **6** | **7** |
|---|---|---|---|
| **Komponente A:** | | | |
| Polyisocyanat A2 | 33,58 | | 32,83 |
| Polyisocyanat A1-I | | 38,59 | |
| Polyisocyanat A1-II | | | |
| SN 100: BA 1:9 | 11,23 | | |
| **Komponente B:** | | | |
| Polyasparaginsäure A1-I | 26,75 | 26,75 | |
| Polyasparaginsäure A1-II | | | 29,31 |
| Polyaldimin A2 | 13,36 | 13,36 | 14,64 |
| Baysilone OL17 10% in MPA | 0,36 | 0,36 | 0,37 |
| Tinuvin 292 | 1,00 | 1,00 | 1,00 |
| Tinuvin 384-2 | 1,51 | 1,51 | 1,50 |
| SN 100: BA 1:9 | 12,20 | 12,20 | 9,37 |
| Dodecylbenzoesäure 10% in Xylol | | 2,0 | |
| **Farbzahl Komponente A** | | | |
| Sofort | 121 | 143 | |
| 9 Wochen RT | 141 | 303 | |
| **Auslaufzeit** DIN4 (sec) nach | | | |
| 0,0 h | 16 | 17 | 15 |
| 0,5 | 19 | 23 | 15 |
| 1,0 | 25 | 30 | 16 |
| 2,0 | 47 | 50 | 17 |
| 4,0 | 90 | 95 | 19 |
| **Trocknungszeit RT** | | | |
| T1 +min | 35 | 15 | 70 |
| T3+min | 60 | 30 | 180 |
| T4+min | 90 | 40 | 210 |
| **Pendelhärte** | | | |
| 1 d RT | 154 | 151 | 155 |
| 7 d RT | 155 | 157 | 168 |

Die Beispiel 1 und 2 zeigen im Gegensatz zum Vergleichsbeispiel 5 einen schnelle Trocknung bei langer Topfzeit (Auslaufzeit). Vergleichsbeispiele 6 zeigt zwar eine schnelle Trocknung und lange Topfzeit (Auslaufzeit), jedoch die Komponente B vergilbt sehr.

Beispiel 3 und 4 zeigen im Gegensatz zum Vergleichsbeispiel 7 eine schnelle Trocknung bei langer Topfzeit (Auslaufzeit).

## Patentansprüche

1. Zweikomponentige Beschichtungssysteme zur Herstellung von Polyhamstoffbeschichtungen, mindestens enthaltend
A) ein sulfonatgruppenhaltiges Polyisocyanat und
B) einen aminofunktionellen Polyasparaginsäureester der allgemeinen Formel (I) 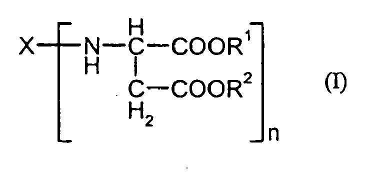 in der
X für einen n-wertigen organischen Rest steht, der durch Entfernung der primären Aminogruppen eines n-wertigen Polyamins erhalten wird,
R¹ , R² für gleiche oder verschiedene organische Reste stehen, die unter den Reaktionsbedingungen gegenüber Isocyanatgruppen inert sind und
n für eine ganze Zahl von mindestens 2 steht.

2. Zweikomponentige Beschichtungssysteme gemäß Anspruch 1, **dadurch gekennzeichnet, dass** die in A) eingesetzten sulfonatmodifizierten Polyisocyanate auf auf Hexamethylendiisocyanat, Isophorondiisocyanat und/oder 4,4'-Dicyclohexylmethandiisocyanat basieren.

3. Zweikomponentige Beschichtungssysteme gemäß Anspruch 1 oder 2, **dadurch gekennzeichnet, dass** die in A) eingesetzten sulfonatmodifizierten Polyisocyanate eine mittlere Isocyanatfunktionalität von mindestens 1,8, einem Gehalt an Isocyanatgruppen (berechnet als NCO; Molekulargewicht = 42) von 4,0 bis 26,0 Gew.-%, einem Gehalt an gebundenen Sulfonsäure- und Sulfonatgruppen (berechnet als SO₃⁻; Molekulargewicht = 80 g/mol) von 0,1 bis 7,7 Gew.-% und 0 bis 19,5 Gew.-% an innerhalb von Polyetherketten gebundenen Ethylenoxideinheiten (berechnet als C₂H₂O; Molekulargewicht = 44) aufweisen.

4. Zweikomponentige Beschichtungssysteme gemäß einem der Ansprüche 1 bis 3, **dadurch gekennzeichnet, dass** auch sulfonatgruppenfreie Polyisocyanate mit verwendet werden und dass das Gewichtsverhältnis von sulfonatgruppenhaltigen zu sulfonatgruppenfreien Polyisocyanaten 80 : 20 bis 20 : 80 beträgt.

5. Zweikomponentige Beschichtungssysteme gemäß einem der Ansprüche 1 bis 4, **dadurch gekennzeichnet, dass** in Formel (I) der Polyasparaginsäureester X auf 1,4-Diaminobutan, 1,6-Diaminohexan, 2,2,4- und/oder 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diamino-dicyclohexylmethan basiert.

6. Zweikomponentige Beschichtungssysteme gemäß einem der Ansprüche 1 bis 5, d**adurch gekennzeichnet, dass** in Formel (I) R¹ = R² = Methyl oder Ethyl sind.

7. Zweikomponentige Beschichtungssysteme gemäß einem der Ansprüche 1 bis 6, **dadurch gekennzeichnet, dass** zusätzlich Polyaldimine und/oder Polyketimine mitenthalten sind.

8. Zweikomponentige Beschichtungssysteme gemäß Anspruch 7, **dadurch gekennzeichnet, dass** die Polyaldimine und/oder Polyketimine der Formel (III) entsprechen 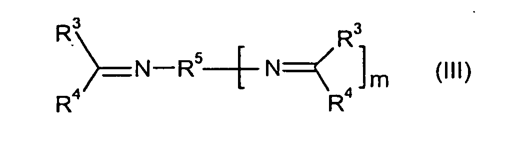 wobei
R³, R⁴ gleiche oder verschiedene Reste sind und Wasserstoff oder Kohlenwasserstoffreste mit bis zu 20 Kohlenstoffatomen sind, wobei R³ und R⁴ in letzterem Fall auch zusammen mit dem Kohlenstoffatom einen 5- oder 6-gliedrigen cycloaliphatischen Ring bilden können,
R⁵ ein (m+1)-wertiger Rest ist, wie er durch Entfernung der primären Aminogruppen aus einem entsprechenden, gegebenenfalls Sauerstoff- und/oder Stickstoffatome enthaltenden Polyamin erhalten wird.
m eine ganze Zahl von 1 bis 3 ist.

9. Zweikomponentige Beschichtungssysteme gemäß Anspruch 7 oder 8, **dadurch gekennzeichnet, dass** das Verhältnis von Komponente B) zu Polyaldiminen und/oder Polyketiminen 80 : 20 bis 20 : 80 beträgt.

10. Zweikomponentige Beschichtungssysteme gemäß einem der Ansprüche 1 bis 9, **dadurch gekennzeichnet, dass** das Verhältnis von freien oder blockierten Aminogruppen zu freien NCO-Gruppen 1 : 1 bis 1,5 : 1 beträgt.

11. Beschichtungen erhältlich aus zweikomponentigen Beschichtungssystemen gemäß einem der Ansprüche 1 bis 10.

## Claims

1. Two-pack coating systems for the production of polyurea coatings, containing at least
A) a sulfonate-group-containing polyisocyanate and
B) an aminofunctional polyaspartate of the general formula (I) 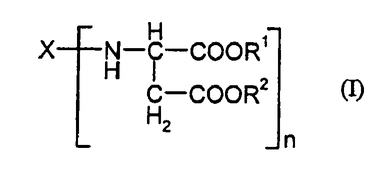
wherein
X denotes an n-valent organic residue, which is obtained by removal of the primary amino groups from an n-valent polyamine,
R¹, R² denote the same or different organic residues, which are inert with respect to isocyanate groups under the reaction conditions and
n denotes an integer of at least 2.

2. Two-pack coating systems according to claim 1, **characterised in that** the sulfonate-modified polyisocyanates used in A) are based on hexamethylene diisocyanate, isophorone diisocyanate and/or 4,4'-dicyclohexylmethane diisocyanate.

3. Two-pack coating systems according to claim 1 or 2, **characterised in that** the sulfonate-modified polyisocyanates used in A) have an average isocyanate functionality of at least 1.8, an isocyanate group content (calculated as NCO; molecular weight = 42) of 4.0 to 26.0 wt.%, a content of bound sulfonic acid and sulfonate groups (calculated as SO₃⁻; molecular weight = 80 g/mol) of 0.1 to 7.7 wt.% and 0 to 19.5 wt.% of ethylene oxide units (calculated as C₂H₂O; molecular weight = 44) bound within polyether chains.

4. Two-pack coating systems according to one of claims 1 to 3, **characterised in that** sulfonate-group-free polyisocyanates are also incorporated and that the weight ratio of sulfonate-group-containing to sulfonate-group-free polyisocyanates is 80:20 to 20:80.

5. Two-pack coating systems according to one of claims 1 to 4, **characterised in that** the polyaspartate X in formula (I) is based on 1,4-diaminobutane, 1,6-diaminohexane, 2,2,4- and/or 2,4,4-trimethyl-1,6-diaminohexane, 1-amino-3,3,5-trimethyl-5-aminomethylcyclohexane, 4,4'-diaminodicyclohexylmethane or 3,3'-dimethyl-4,4'-diaminodicyclohexylmethane.

6. Two-pack coating systems according to one of claims 1 to 5, **characterised in that** in formula (I), R¹ = R² = methyl or ethyl.

7. Two-pack coating systems according to one of claims 1 to 6, **characterised in that** polyaldimines and/or polyketimines are additionally incorporated.

8. Two-pack coating systems according to claim 7, **characterised in that** the polyaldimines and/or polyketimines correspond to formula (III) 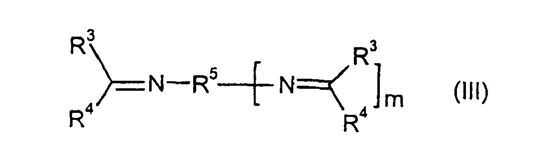 wherein
R³ and R⁴ are the same or different residues and are hydrogen or hydrocarbon residues with up to 20 carbon atoms, with R³ and R⁴ also, in the latter case, possibly forming a 5- or 6-membered cycloaliphatic ring together with the carbon atom.
R⁵ is an (m+1)-valent residue, as obtained by removal of the primary amino groups from a corresponding polyamine optionally containing oxygen and/or nitrogen atoms,
m is an integer from 1 to 3.

9. Two-pack coating systems according to claim 7 or 8, **characterised in that** the ratio of component B) to polyaldimines and/or polyketimines is 80:20 to 20:80.

10. Two-pack coating systems according to one of claims 1 to 9, **characterised in that** the ratio of free or blocked amino groups to free NCO groups is 1:1 to 1.5:1.

11. Coatings obtainable from two-pack coating systems according to one of claims 1 to 10.

## Revendications

1. Système de revêtement à deux composants pour la préparation de revêtements en polyurée, contenant au moins
A) un polyisocyanate contenant des groupes sulfonate, et
B) un poly(ester d'acide aspartique) à fonction amino de la formule générale (1) : 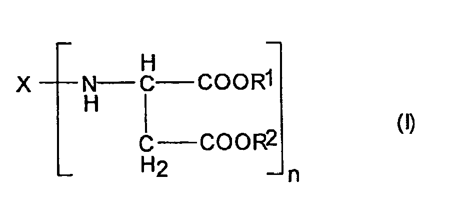
dans laquelle
X représente un reste organique n-valent, qui est obtenu par élimination des groupes amino primaires d'une polyamine n-valente,
R¹, R² représentent des restes organiques identiques ou différents, qui sont inertes par rapport aux groupes isocyanate dans les conditions de réaction, et
n est un entier valant au moins 2.

2. Système de revêtement à deux composants selon la revendication 1, **caractérisé en ce que** le polyisocyanate modifié sulfonate, mis en oeuvre en A), est à base d'hexaméthylènediisocyanate, d'isophoronediisocyanate et/ou de 4,4'-dicyclohexylméthanediisocyanate.

3. Système de revêtement à deux composants selon la revendication 1 ou 2, **caractérisé en ce que** le polyisocyanate modifié sulfonate, mis en oeuvre en A), présente une fonctionnalité isocyanate moyenne d'au moins 1,8, une teneur en groupes isocyanate (calculée comme NCO ; poids moléculaire = 42) allant de 4,0 à 26,0% en poids, une teneur en groupes acide sulfonique ou sulfonate liés (calculée comme SO₃⁻ ; poids moléculaire = 80 g/mole) allant de 0,1 à 7,7% en poids, et 0 à 19,5% en poids d'unités oxyde d'éthylène (calculé comme C₂H₂O ; poids moléculaire = 44) liées au sein de chaînes polyéther.

4. Système de revêtement à deux composants selon l'une des revendications 1 à 3, **caractérisé en ce que** l'on utilise également, des polyisocyanates exempts de groupe sulfonate, et **en ce que** le rapport pondéral des polyisocyanates contenant des groupes sulfonate aux polyisocyanates exempts de groupe sulfonate se situe dans l'intervalle allant de 80:20 à 20:80.

5. Système de revêtement à deux composants selon l'une des revendications 1 à 4, **caractérisé en ce que** dans la formule (I) du poly(ester d'acide aspartique), X est basé sur le 1,4-diaminobutane, le 1,6-diaminohexane, le 2,2,4- et/ou le 2,4,4-triméthyl-1,6-diaminohexane, le 1-amino-3,3,5-triméthyl-5-aminométhylcyclohexane, le 4,4'-diaminodicyclohexylméthane ou le 3,3'-diméthyl-4,4'-diaminodicyclohexylméthane.

6. Système de revêtement à deux composants selon l'une des revendications 1 à 5, **caractérisé en ce que** dans la formule (I), R¹ = R² = méthyle ou éthyle.

7. Système de revêtement à deux composants selon l'une des revendications 1 à 6, **caractérisé en ce que** des polyaldimines et/ou des polycétimines sont également présentes.

8. Système de revêtement à deux composants selon la revendication 7, **caractérisé en ce que** les polyaldimines et/ou polycétimine correspondent à la formule (III) : 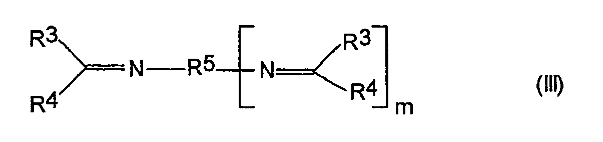 où
R³, R⁴ sont des restes identiques ou différents et sont l'hydrogène ou un reste hydrocarbure ayant jusqu'à 20 atomes de carbone, où R³ et R⁴ peuvent former également, dans ce dernier cas, ensemble, un reste cycloaliphatique de 5 ou 6 membres,
R⁵ est un reste (m+1)-valent, comme il est obtenu par élimination des groupes amino primaires d'une polyamine appropriée, contenant le cas échéant, des atomes d'oxygène et/ou d'azote,
m est un entier allant de 1 à 3.

9. Système de revêtement à deux composants selon la revendication 7 ou 8, **caractérisé en ce que** le rapport du composant b) auX polyaldimines et/ou polycétimines se situe dans l'intervalle allant de 80:20 à 20:80.

10. Système de revêtement à deux composants selon l'une des revendications 1 à 9, **caractérisé en ce que** le rapport des groupes amino libres ou bloqués aux groupes NCO libres se situe dans l'intervalle allant de 1:1 à 1,5:1.

11. Revêtements pouvant être obtenus à partir des systèmes de revêtement à deux composants selon l'une des revendications 1 à 10.
